# EUROPÄISCHE PATENTSCHRIFT

(11) **EP 2 794 389 B1**
(45) Veröffentlichungstag und Bekanntmachung des Hinweises auf die Patenterteilung: **14.09.2016**
(21) Anmeldenummer: 12821098.6
(22) Anmeldetag: 12.12.2012
(51) Int. Cl.: B62K 3/00, B62K 13/00

(54) **TRETROLLER**
SCOOTER
TROTTINETTE

(30) Priorität: 22.12.2011 AT 500192011
(43) Veröffentlichungstag der Anmeldung: 29.10.2014
(60) Teilanmeldung: 15163647.9
(73) Patentinhaber: SCOOT & RIDE GMBH, A-4710 Grieskirchen (AT)
(72) Erfinder: BERNDORFER, Wolfgang, A-4723 Natternbach (AT); KIRCHSCHLAGER, Robert, A-4060 Leonding (AT)
(74) Vertreter: Ellmeyer, Wolfgang
(86) Internationale Anmeldenummer: PCT/AT2012/000317
(87) Internationale Veröffentlichungsnummer: WO 2013/090953

(56) Entgegenhaltungen:
- AT-A4- 507 557
- CN-U- 201 694 317
- CN-U- 201 980 351
- DE-U1-202006 017 904
- SU-A1- 988 637
- TW-A- 200 624 320
- US-A- 1 379 305

## Beschreibung

Die Erfindung bezieht sich auf einen Tretroller mit einem Fahrgestell, das ein Führungslager für eine das Vorderrad aufnehmende Lenksäule und einen Sitz aufweisenden Tragarm für ein verschwenkbares, mit einem Hinterrad versehenes Trittbrett aufweist.

Bekannte Tretroller weisen ein Fahrgestell auf, das im Wesentlichen ein Führungslager für eine das Vorderrad aufnehmende Lenksäule und ein mit einem Hinterrad versehenes Trittbrett umfasst, das entweder starr mit dem Führungslager verbunden ist oder aus einer verrastbaren Gebrauchsstellung in eine Transportstellung verschwenkbar an diesem angelenkt ist. Um derartige Tretroller mit einer Sitzgelegenheit auszustatten, wurde bereits vorgeschlagen (AT 507 557, DE29819701 U), am das Trittbrett mit dem Führungslager verbindenden Tragarm einen Sitz zu befestigen, was jedoch einerseits mit zusätzlichen konstruktiven Maßnahmen verbunden ist und andererseits die Benützung des Tretrollers im Stehen einschränkt.

Der in US1379305 offenbarte Tretroller umfasst keine Anlenkung des Tragarms am Führungslager. Dokument CN2019803514 wird als der nächste Stand der Technik angesehon und offenbart die Preämbel des Anspruchs 1. Der Erfindung liegt somit die Aufgabe zugrunde, einen Tretroller der eingangs geschilderten Art mit vergleichsweise einfachen konstruktiven Mitteln so auszugestalten, dass der Sitz wahlweise benützt werden kann, ohne den Gebrauch des Tretrollers mit einer Fußabstützung am Trittbrett zu beeinträchtigen.

Die Erfindung löst die gestellte Aufgabe dadurch, dass der mit dem Trittbrett verbundene Tragarm um eine durch den Mittelpunkt des Hinterrades verlaufende Achse verschwenkbar am Führungslager angelenkt ist.

Durch diese Maßnahmen ergeben sich für den durch den Tragarm und das Trittbrett gebildeten Fahrgestellabschnitt zwei mögliche Gebrauchsstellungen gegenüber dem Führungslager und der Lenksäule. Da dieser Fahrgestellabschnitt für die beiden Gebrauchsstellungen um 180° um eine Achse verschwenkt wird, die durch den Mittelpunkt des Hinterrades verläuft, nimmt das Hinterrad in beiden Gebrauchsstellungen eine übereinstimmende Gebrauchslage ein, was eine konstruktive Voraussetzung für ein gleichbleibendes Fahrverhalten des Tretrollers in den beiden Gebrauchsstellungen zufolge eines übereinstimmenden Radstandes darstellt.

In der Gebrauchsstellung als herkömmlicher Tretroller verläuft das Trittbrett im Wesentlichen parallel zur Fahrbahn, sodass der Standfuß in üblicher Art auf das Trittbrett aufgesetzt werden kann. Nach einer 180°-Drehung des Tragarmes für das Trittbrett ragt das Trittbrett vom Hinterrad nach oben auf und stützt den nunmehr von der Lenksäule nach hinten abstehenden Tragarm ab, auf dem sich der Sitz befindet. Der Tragarm kann dabei zur Positionierung des Sitzes um seine Achse drehbar gelagert sein. Besonders vorteilhafte Konstruktionsbedingungen ergeben sich allerdings, wenn der Sitz auf der vom Trittbrett abgekehrten Seite des Tragarmes angeordnet wird. Der Tretroller kann somit als Laufrad für einen sitzenden Benützer dienen, wobei die Beine seitlich neben dem Tragarm des Fahrgestells am Boden abgestoßen werden können, und zwar unbehindert durch das Trittbrett.

Der durch den Tragarm und das Trittbrett gebildete Fahrgestellabschnitt kann in den beiden Gebrauchsstellungen mit Hilfe einer Sperreinrichtung, beispielsweise einem Sperrbolzen oder einer Feststellschraube, gegenüber dem Führungslager verriegelt werden. Die Sperreinrichtung ist dabei derart auszulegen, dass eine unbeabsichtigte Entriegelung während des Gebrauchs des Tretrollers ausgeschlossen wird.

Besonders vorteilhafte Konstruktionsverhältnisse ergeben sich, wenn der Tragarm und das Trittbrett mit der Schwenkachse den gleichen Winkel einschließen. Auf diese Weise ist sichergestellt, dass das Trittbrett und der Tragarm eine etwa gleiche Länge aufweisen, was vorteilhafte Benützungsbedingungen gewährleistet, insbesondere, wenn berücksichtigt wird, dass das Schwenklager für den Tragarm vorzugsweise in einem der Sitzhöhe angepassten Bodenabstand am Führungslager für die Lenksäule vorgesehen ist.

Trotz der Lagerung des Fahrgestellabschnitts aus Tragarm und Trittbrett um eine durch den Mittelpunkt des Hinterrades verlaufende Schwenkachse ist es möglich, den Tretroller für den Transport zusammenlegbar auszugestalten, wenn das Trittbrett am Tragarm um eine zur Hinterradachse parallele Achse von einer verrastbaren Gebrauchsstellung in eine Transportstellung verschwenkbar gelagert ist. Wird das Trittbrett in der Gebrauchsstellung als üblicher Tretroller gegen den Tragarm eingeschwenkt, so legt sich das Hinterrad im Bereich des Schwenklagers für den Tragarm an diesen an, was eine kompakte Transportstellung mit sich bringt.

In der Zeichnung Ist der Erfindungsgegenstand beispielsweise dargestellt. Es zeigen
- Fig. 1: einen erfindungsgemäßen Tretroller in einer vereinfachten Seitenansicht,
- Fig. 2: eine der Fig. 1 entsprechende Darstellung des Tretroller, jedoch in einer Gebrauchsstellung als Laufrad und
- Fig. 3: den Tretroller in einer zusammengeklappten Transportstellung.

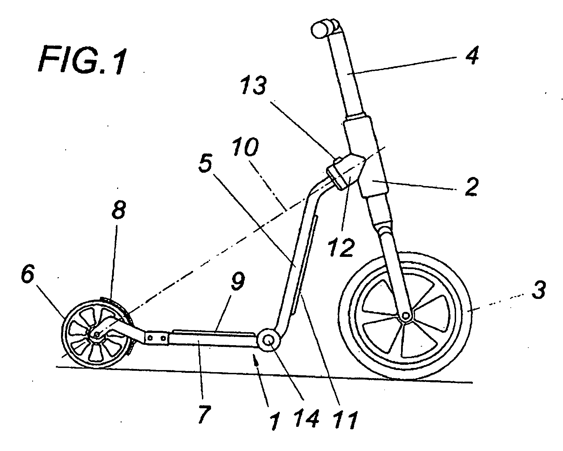

Der Tretroller gemäß dem dargestellten Ausführungsbeispiel weist ein Fahrgestell 1 mit einem Führungslager 2 für eine ein Vorderrad 3 aufnehmende Lenksäule 4 und mit einem Tragarm 5 für ein mit einem Hinterrad 6 versehenes Trittbrett 7 auf. Eine Abdeckung für das Hinterrad 8 kann gemäß der Fig. 1 in herkömmlicher Weise als Bremsvorrichtung genutzt werden. Das Trittbrett 7 kann zur Verbesserung der Rutschsicherheit mit einer Fußauflage 9 versehen sein, die einem Abgleiten des Standfußes vom Trittbrett 7 entgegenwirkt.

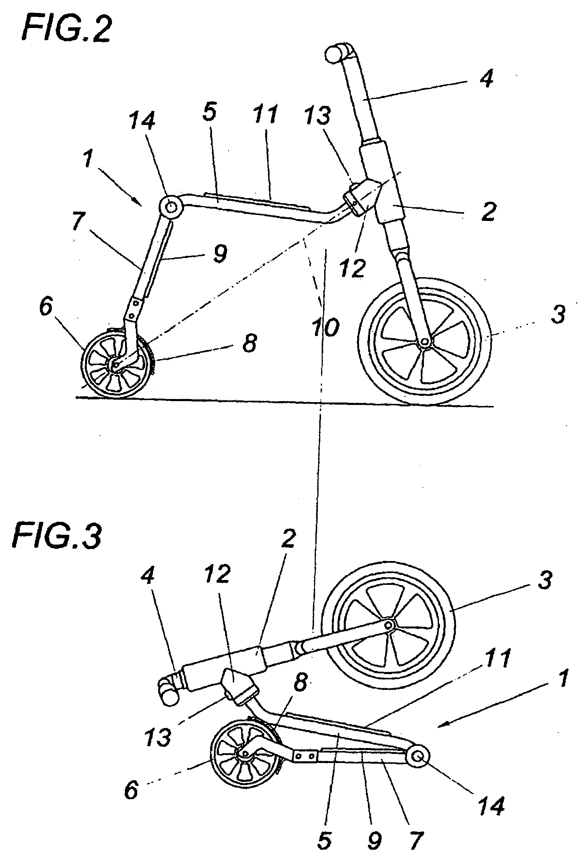

Der Tragarm 5 ist um eine, durch den Mittelpunkt des Hinterrades 6 verlaufende Achse 10 am Führungslager 2 schwenkverstellbar angelenkt. Durch die Schwenkverstellung um die Schwenkachse 10 wird es möglich, den aus Tragarm 5 und Trittbrett 7 gebildeten Fahrgestellabschnitt um 180° aus einer in der Fig. 1 dargestellten Lage für einen Trittbretteinsatz in eine Gebrauchslage zu verschwenken, in der gemäß der Fig. 2 ein Sitz 11 benutzt werden kann, der auf der dem Trittbrett 7 abgekehrten Seite des Tragarms 5 vorgesehen ist. Ein auf dem Sitz 11 sitzender Benützer kann somit den Tretroller als Laufrad benützen, indem er sich mit seinen Beinen zu beiden Seiten des Tragarmes 5 auf der Fahrbahn abstößt. Das aufgrund der 180°-Drehung vom Hinterrad 6 nach oben aufragende Trittbrett 7 behindert die Beinbewegung des Laufradbenützers nicht. Wie sich aus dem Vergleich der Fig. 1 und 2 ergibt, behält das Hinterrad 6 in beiden Gebrauchsstellungen des Tretrotters seine Lage bei, sodass sich der Radstand nicht ändert und für beide Gebrauchsstellungen übereinstimmende Fahr- und Lenkeigenschaften gewährleistet werden. Mit einem Bodenabstand des Anlenklagers 12 des Tragarms 5 am Führungslager 2 entsprechend der Sitzhöhe können besonders vorteilhafte Konstruktionsbedingungen vorgegeben werden, weil in diesem Fall der Tragarm 5 mit dem Sitz 11 annähernd parallel zur Fahrbahn verlaufen kann.

Voraussetzung für ein stabiles Fahrverhalten ist die Verriegelung des Fahrgestells 1 in den beiden Gebrauchsstellungen. Zu diesem Zweck kann das Anlenklager 12 für den Tragarm 5 mit einer Sperreinrichtung 13 versehen sein, beispielsweise einer gewöhnlichen Sperraste. Der Betätigungsmechanismus der Sperreinrichtung 13 kann dabei in herkömmlicher Weise sicherstellen, dass eine unbeabsichtigte Entriegelung während der Benutzung des Tretrollers ausgeschlossen wird.

Wie der Fig. 3 entnommen werden kann, ist es trotz der Anlenkung des Tragarmes 5 am Führungslager 2 um eine, durch die Hinterradachse verlaufenden Achse 10 möglich, führ den Tretroller eine zusammengeklappte Transportstellung zu erreichen. Zu diesem Zweck kann zwischen dem Tragarm 5 und dem Trittbrett 7 ein zumindest in den Gebrauchsstellungen des Tretrollers verrastbares Gelenk 14 vorgesehen werden. Nach dem Lösen der Verrastung kann das Trittbrett 7 gegen den Tragarm 5 eingeschwenkt werden, bis das Hinterrad 6 am Tragarm 5 anliegt. Je nach der Schwenklage des Tragarmes 5 im Anlenklager 12 werden unterschiedliche Transportstellungen möglich. Eine davon ist in der Fig. 3 dargestellt.

## Patentansprüche

1. Tretroller mit einem Fahrgestell (1), das ein Führungslager (2), welches eine ein Vorderrad (3) aufnehmende Lenksäule (4) und einen Sitz (11) aufweisenden Tragarm (5) mit einem verschwenkbaren, mit einem Hinterrad (8) versehenen Trittbrett Lagert, (7) aufweist, **dadurch gekennzeichnet, dass** der mit dem Trittbrett (7) verbundene Tragarm (5) um eine, durch den Mittelpunkt des Hinterrades (8) verlaufende Achse (10) verschwenkbar am Führungslager (2) angelenkt ist.

2. Tretroller nach Anspruch 1, **dadurch gekennzeichnet, dass** der Tragarm (5) den Sitz (11) auf der vom Trittbrett (7) abgekehrten Seite trägt.

3. Tretroller nach Anspruch 1 oder 2, **dadurch gekennzeichnet, dass** sowohl der Tragarm (5) als auch das Trittbrett (7) mit der Schwenkachse (10) den gleichen Winkel einschließen.

4. Tretroller nach einem der Ansprüche 1 bis 3, **dadurch gekennzeichnet, dass** das Trittbrett (7) am Tragarm (5) um eine zur Hinterradachse parallele Achse von einer verrastbaren Gebrauchsstellung in eine Transportstellung verschwenkbar gelagert ist.

## Claims

1. A scooter comprising a chassis (1), which has a guide bearing (2) supporting a steering column (4), which holds a front wheel (3), and a supporting arm (5), which has a seat (11), comprising a pivotable footboard (7) provided with a rear wheel (8), **characterized in that** the supporting arm (5) connected to the footboard (7) is hinged to the guide bearing (2) so as to be pivotable about an axis (10) extending through the center of the rear wheel (8).

2. The scooter according to claim 1, **characterized in that** the supporting arm (5) carries the seat (11) on the side facing away from the footboard (7).

3. The scooter according to claim 1 or 2, **characterized in that** both the supporting arm (5) and the footboard (7) enclose the same angle with the pivot axis (10).

4. The scooter according to any one of claims 1 to 3, **characterized in that** the footboard (7) is supported by the supporting arm (5) so as to be pivotable about an axis parallel to the rear wheel axis from a lockable usage position into a transport position.

## Revendications

1. Trottinette avec un châssis (1) ayant un palier de guidage (2) qui supporte une colonne de direction (4) accueillant une roue avant (3) et qui supporte un bras de support (5) ayant un siège (11), ledit bras de support (5) comprenant un marchepied (7) fourni d'une roue arrière (8), **caractérisé en ce que** le bras de support (5) relié au marchepied (7) est articulé au palier de guidage (2) de sorte qu'il peut être pivoté autour d'un axe (10) s'étendant par le centre de la roue arrière (8).

2. Trottinette selon la revendication 1, **caractérisé en ce que** le bras de support (5) supporte le siège (11) sur le côté opposé du marchepied (7).

3. Trottinette selon la revendication 1 ou 2, **caractérisé en ce que** le bras de support (5) et le marchepied (7) incluent le même angle avec l'axe de pivotage (10).

4. Trottinette selon l'une des revendications 1 à 3, **caractérisé en ce que** le marchepied (7) est supporté au bras de support (5) de sorte qu'il peut être pivoté autour d'un axe parallèle à l'axe de la roue arrière d'une position d'usage enclenchable dans une position de transport.
